(19) Europäisches Patentamt
European Patent Office
Office européen des brevets

(11) **EP 4 601 063 A1**

(12) **EUROPEAN PATENT APPLICATION**
published in accordance with Art. 153(4) EPC

(43) Date of publication:
**13.08.2025 Bulletin 2025/33**

(21) Application number: **23930151.8**

(22) Date of filing: **28.12.2023**

(51) International Patent Classification (IPC):
**H01M 10/056** (2010.01)     **H01M 10/0525** (2010.01)

(52) Cooperative Patent Classification (CPC):
Y02E 60/10

(86) International application number:
**PCT/CN2023/142849**

(87) International publication number:
**WO 2024/198588 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2023 CN 202310294817**

(71) Applicant: **Jiangsu Contemporary Amperex
Technology Limited
Changzhou, Jiangsu 213300 (CN)**

(72) Inventors:
• **NING, Ziyang
hangzhou, Jiangsu 213300 (CN)**

• **LIU, Chengyong
hangzhou, Jiangsu 213300 (CN)**
• **HU, Bobing
hangzhou, Jiangsu 213300 (CN)**
• **XUE, Wenwen
hangzhou, Jiangsu 213300 (CN)**
• **YANG, Dunjie
hangzhou, Jiangsu 213300 (CN)**
• **ZHONG, Chengbin
hangzhou, Jiangsu 213300 (CN)**

(74) Representative: **Ran, Handong et al
Maucher Jenkins
Seventh Floor Offices
Artillery House
11-19 Artillery Row
London SW1P 1RT (GB)**

(54) **SOLID-STATE ELECTROLYTE MEMBRANE, PREPARATION METHOD THEREFOR,
ALL-SOLID-STATE BATTERY AND ELECTRICAL APPARATUS**

(57)     A solid-state electrolyte membrane, a preparation method therefor, an all-solid-state battery and an electrical apparatus. The solid-state electrolyte membrane comprises a solid-state electrolyte and a ceramic fiber material dispersed in the solid-state electrolyte; the solid-state electrolyte comprises an inorganic solid-state electrolyte; when the diameter of the ceramic fiber material is denoted as D and the length of the ceramic fiber material is denoted as L, the diameter of the ceramic fiber material and the length of the ceramic fiber material satisfy: $L/D \geq 2$. Since the ceramic fiber material is dispersed in the solid-state electrolyte, when the solid-state electrolyte membrane is fractured by the stress generated by electrochemical deposition, the ceramic fiber material around cracks may be pulled out or fractured so as to absorb a large amount of strain energy of the fracture, thus substantially increasing the difficulty of crack propagation, improving the fracture toughness of solid-state electrolyte membranes so as to enhance mechanical properties thereof and inhibit generation of lithium dendrites, and also significantly increasing the critical current density of the solid-state electrolyte membranes.

FIG. 1

## Description

### CROSS-REFERENCE TO RELATED APPLICATIONS

This application refers to Chinese Patent Application No. 202310294817.3, filed on March 24, 2023, entitled SOLID-STATE ELECTROLYTE MEMBRANE AND PREPARATION METHOD THEREOF, ALL-SOLID-STATE BATTERY, AND ELECTRIC APPARATUS, which is incorporated herein by reference in its entirety.

### TECHNICAL FIELD

The present application relates to the field of secondary battery technology, and in particular, to a solid-state electrolyte membrane and a preparation method thereof, an all-solid-state battery, and an electric apparatus.

### BACKGROUND

Lithium-ion batteries have extremely wide applications in fields such as portable electronic devices and electric vehicles. With the development of modern society, people increasingly demand higher safety standards for lithium-ion batteries. As battery research progresses, solid-state batteries that are non-flammable, non-corrosive, non-volatile, and free from electrolyte leakage issues have emerged. In recent years, solid-state batteries have been regarded as successors to lithium-ion batteries. Solid-state battery technology replaces liquid electrolytes with solid-state electrolytes, significantly enhancing the energy density of batteries.

However, all-solid-state batteries in related technologies are prone to short-circuit issues during fast charging processes.

### SUMMARY

The present application addresses the aforementioned issues, with the purpose including providing a solid-state electrolyte membrane and a preparation method thereof, an all-solid-state battery, and an electric apparatus, to reduce the probability of short circuits during fast charging of the all-solid-state battery and enhance the fast charging capability of the all-solid-state battery.

To achieve the above purpose, a first aspect of the present application provides a solid-state electrolyte membrane including a solid-state electrolyte and a ceramic fiber material dispersed in the solid-state electrolyte; where

the solid-state electrolyte includes an inorganic solid-state electrolyte; and

a diameter of the ceramic fiber material is denoted as D, a length of the ceramic fiber material is denoted as L, and the diameter and the length of the ceramic fiber material satisfy: $L/D \geq 2$.

Due to the dispersion of the ceramic fiber material in the solid-state electrolyte, when the solid-state electrolyte membrane fractures under stress from electrochemical deposition, the ceramic fiber material around cracks undergoes pull-out or breakage phenomena, absorbing a large amount of strain energy from the fracture, significantly increasing the difficulty of crack propagation, and enhancing the fracture toughness of the solid-state electrolyte membrane to exceed $0.05 \text{ MPa m}^{1/2}$. This enhancement improves the mechanical properties of the solid-state electrolyte membrane and suppresses the formation of lithium dendrites, while substantially increasing the critical current density of the solid-state electrolyte membrane, thereby improving the fast charging capability of the all-solid-state battery. Additionally, when the aspect ratio of the ceramic fiber material is $\geq 2$, the toughness of the solid-state electrolyte membrane further increases.

In some embodiments, the diameter and the length of the ceramic fiber material satisfy: $L/D \geq 20$; and optionally, $20 \leq L/D \leq 500$.

In some embodiments, the diameter of the ceramic fiber material satisfies: $D \leq 5 \mu m$; and optionally, $0.5 \mu m \leq D \leq 2 \mu m$.

In some embodiments, the length of the ceramic fiber material satisfies: $1 \mu m \leq L \leq 500 \mu m$; and optionally, $10 \mu m \leq L \leq 200 \mu m$.

In some embodiments, the ceramic fiber material includes one or more of silicon carbide fiber, silicon nitride fiber, boron nitride fiber, aluminum oxide fiber, and silicon dioxide fiber.

In some embodiments, the ceramic fiber material exhibits at least one of the following characteristics (1)-(2):

(1) a volume ratio of the ceramic fiber material to the solid-state electrolyte is (0.01-40): 100; and optionally, (3-7): 100; and

(2) a mass ratio of the ceramic fiber material to the solid-state electrolyte is (0.01-85):100; and optionally, (2-15): 100.

In some embodiments, a distribution uniformity of the ceramic fiber material in the solid-state electrolyte is $\leq 0.3$; and optionally, the distribution uniformity of the ceramic fiber material in the solid-state electrolyte is $\leq 0.1$.

In some embodiments, the solid-state electrolyte further includes a binder distributed therein;

optionally, the binder includes one or more of nitrile rubber, polyvinylidene fluoride, polytetrafluoroethylene, polyacrylic acid, polyvinyl alcohol, polyimide, polyacrylonitrile, polyurethane, polycarboxymethyl cellulose, cyclodextrin, sodium alginate, polysaccharide, nitrile rubber, and styrene-butadiene rubber; and

optionally, a mass ratio of the binder to the solid-state electrolyte is (0.01-20):100; and optionally, (0.5-5):100.

In some embodiments, the solid-state electrolyte membrane exhibits at least one of the following characteristics (1)-(4):

(1) a critical current density of the solid-state electrolyte membrane at 25°C is 0.5 mA/cm$^2$-10 mA/cm$^2$;
(2) a fracture toughness of the solid-state electrolyte membrane is 0.05 MPa m^(1/2)-2 MPa m^(1/2);
(3) an ionic conductivity of the solid-state electrolyte membrane at 25°C is 0.1 mS/cm$^2$-10 mS/cm$^2$; and
(4) a thickness of the solid-state electrolyte membrane is 1 $\mu$m-1000 $\mu$m.

A second aspect of the present application provides a preparation method of a solid-state electrolyte membrane, including the following steps:

mixing the ceramic fiber material and the solid-state electrolyte to prepare a mixture; and
performing a forming process on the mixture to prepare the solid-state electrolyte membrane.

In some embodiments, dry mixing is used to mix the ceramic fiber material and the solid-state electrolyte; and optionally, the mixing time is 1 h-24 h.

In some embodiments, the forming process involves pressure treatment; and optionally, a pressure of the pressure treatment is 200 MPa-600 MPa.

In some embodiments, wet mixing is used to mix the ceramic fiber material and the solid-state electrolyte; and optionally, the mixing time is 0.5 h-12 h.

In some embodiments, the forming process includes applying the mixture to form a film followed by drying.

A third aspect of the present application provides an all-solid-state battery including the solid-state electrolyte membrane of the first aspect.

A fourth aspect of the present application provides an electric apparatus including the all-solid-state battery of the third aspect.

Details of one or more embodiments of the present application are provided in the accompanying drawings and description below. Other features, purposes, and advantages of the present application become apparent from the specification, the accompanying drawings, and the claims.

**BRIEF DESCRIPTION OF DRAWINGS**

To better describe and illustrate the embodiments or examples provided in the present application, reference may be made to one or more accompanying drawings. The additional details or examples used to describe the accompanying drawings should not be considered as limitations on the scope of any invention disclosed herein, the currently described embodiments or examples, or the best mode of the present application as currently understood. Moreover, throughout the accompanying drawings, the same reference signs represent the same components. In the accompanying drawings:

FIG. 1 shows a cross-sectional SEM image of a solid-state electrolyte membrane in Example 2 of the present application.
FIG. 2 shows a schematic diagram of an all-solid-state battery according to an embodiment of the present application.
FIG. 3 shows an exploded view of the all-solid-state battery according to the embodiment of the present application in FIG. 2.
FIG. 4 shows a schematic diagram of an electric apparatus using an all-solid-state battery as a power source according to an embodiment of the present application.

Description of reference signs:

111. ceramic fiber material; 112. solid-state electrolyte;
1. all-solid-state battery; 11. housing; 12. electrode assembly; 13. cover plate; and 2. electric apparatus.

## DESCRIPTION OF EMBODIMENTS

To facilitate understanding of the present application, the present application is described more comprehensively below with reference to the relevant accompanying drawings. Preferred embodiments of the present application are shown in the accompanying drawings. However, the present application may be implemented in many different forms and is not limited to the embodiments described herein. Rather, these embodiments are provided for the purpose of providing a more thorough understanding of the disclosure of the present application.

Unless otherwise defined, all technical and scientific terms used herein have the same meanings as commonly understood by a person skilled in the art to which the present application pertains. The terms used herein in the specification of the present application are intended to merely describe the specific embodiments rather than to limit the present application.

In the present application, technical features described in an open-ended manner include both closed technical solutions composed of the listed features and open technical solutions incorporating the listed features.

In the present application, when a numerical range is involved, unless otherwise specified, values within the range are considered continuous, encompassing both the minimum and maximum values of the range, as well as each individual value between the minimum and maximum values. Furthermore, when the range refers to an integer range, each integer between the minimum and maximum values is included. Additionally, when multiple ranges are provided for the description of features or properties, those ranges may be combined. In other words, unless otherwise indicated, all ranges disclosed in the present specification should be understood to encompass any and all subranges included therein.

In the present application, when a unit is related to a data range, if the unit is only provided after the right endpoint, the units for both the left and right endpoints are the same. For example, 10-1000 nm indicates that the units for both the left endpoint "10" and the right endpoint "1000" are nm (nanometers).

In the present application, terms such as "a plurality of," "multiple," and "various," unless specifically specified, refer to a quantity greater than 2 or equal to 2. For example, "a plurality of" indicates greater than or equal to two. The present application specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit, which may be combined with any other point or individual numerical value or combined with another lower limit or upper limit to form a range not expressly recorded.

"Ranges" disclosed in the present application are defined in the form of lower and upper limits. A given range is defined by one lower limit and one upper limit selected, where the selected lower and upper limits define boundaries of that specific range. A range defined in this manner may include or exclude the endpoints.

The temperature parameter in the present application, unless specifically specified, allows for both constant-temperature treatment and treatment within a specific temperature range. The constant-temperature treatment allows the temperature to fluctuate within a precision range controlled by an instrument.

Reference to "embodiment" herein means that a specific feature, structure, or characteristic described in connection with the embodiment may be included in at least one embodiment or implementation of the present application. The word "embodiment" appearing in various places in the present specification does not necessarily refer to the same embodiment or an independent or alternative embodiment that is exclusive of other embodiments. A person skilled in the art explicitly and implicitly understands that the embodiments described herein may be combined with other embodiments. The term "implementation" mentioned herein has a similar understanding.

A person skilled in the art may understand that, in the methods of various implementations or embodiments, the order of writing the steps does not imply a strict execution sequence that imposes any limitation on the implementation process. The detailed execution sequence of the steps should be determined based on their functions and possible inherent logic. Unless otherwise stated, all steps in the present application may be performed in the order described or in random order, with the order described being preferred. For example, a method including steps (a) and (b) indicates that the method may include steps (a) and (b) performed in order or may include steps (b) and (a) performed in order. For example, the foregoing method may further include step (c), indicating that step (c) may be added to the method in any ordinal position, for example, the method may include steps (a), (b), and (c), steps (a), (c), and (b), or steps (c), (a), and (b), and so forth.

In the present application, technical features or solutions described with terms such as "contain", "include", "comprise", or similar expressions in an open-ended manner, unless otherwise specified, do not exclude additional members beyond the listed members. Such descriptions may be regarded as providing both closed features or solutions composed of the listed members and open features or solutions including additional members beyond the listed members. For example, A includes a1, a2, and a3; unless otherwise specified, A may further include other members or may not include additional members. This may be regarded as providing both a feature or solution where "A consists of a1, a2, and a3" and a feature or solution where "A includes not only a1, a2, and a3 but also other members." In recent years, as battery research has progressed, the application of solid-state batteries has become increasingly widespread. All-solid-state batteries in related technologies are prone to short-circuit issues during fast charging processes. The technical personnel of the present application have found through research that, during the charging process of an all-solid-state battery, high-rate charging leads to uneven lithium deposition. The uneven lithium deposition process may induce cracking of the electrolyte and the formation of dendrites; dendrites penetrate the solid-state electrolyte and eventually establish an electron pathway between the positive electrode and the negative electrode, resulting in short circuits and failure of the all-solid-state battery.

Additionally, solid-state electrolyte membranes also suffer from brittleness and excessively low fracture toughness issues.

The present application provides a solid-state electrolyte membrane including a solid-state electrolyte and a ceramic fiber material dispersed in the solid-state electrolyte; the solid-state electrolyte includes an inorganic solid-state electrolyte; and a diameter of the ceramic fiber material is denoted as D, a length of the ceramic fiber material is denoted as L, and the diameter and the length of the ceramic fiber material satisfy: $L/D \geq 2$.

It should be noted that the ceramic fiber material may be uniformly dispersed or randomly dispersed in the solid-state electrolyte. Preferably, the ceramic fiber material is uniformly dispersed in the solid-state electrolyte, where the distribution of the ceramic fiber material in the solid-state electrolyte exhibits no obvious spatial orientation characteristics.

Understandably, due to the dispersion of the ceramic fiber material in the solid-state electrolyte, when the solid-state electrolyte membrane fractures under stress from electrochemical deposition, the ceramic fiber material around cracks undergoes pull-out or breakage phenomena, absorbing a large amount of strain energy from the fracture, significantly increasing the difficulty of crack propagation, and enhancing the fracture toughness of the solid-state electrolyte membrane to exceed 0.05 MPa m^(1/2). This enhancement improves the mechanical properties of the solid-state electrolyte membrane and suppresses the formation of lithium dendrites, while substantially increasing the critical current density of the solid-state electrolyte membrane, thereby improving the fast charging capability of the all-solid-state battery. Additionally, when the aspect ratio of the ceramic fiber material is $\geq 2$, the fracture toughness of the solid-state electrolyte membrane further increases.

The length and the diameter of the ceramic fiber material mentioned above may be measured using the following method: prepare a cross-section of the solid-state electrolyte membrane with a neat fracture using an ultrasonic knife, observe the cross-section through a scanning electron microscope, distinguish the ceramic fiber material based on material contrast in the backscattered electron imaging mode of the scanning electron microscope, and measure the length and the diameter of the ceramic fiber material.

In some implementations, the diameter and the length of the ceramic fiber material satisfy: $L/D \geq 20$; when the diameter and the length of the ceramic fiber material satisfy this relationship, the degree of interlacing of the ceramic fiber material is high, covering the majority of the volume of the solid-state electrolyte, enhancing the toughening effect, and reducing the issue of uneven ionic conduction at the interface due to the continuous exposed area of the ceramic fiber material at the lithium metal-solid-state electrolyte interface.

In some exemplary embodiments, the diameter and the length of the ceramic fiber material satisfy: $20 \leq L/D \leq 500$; for example, the range may be $20 \leq L/D \leq 450$, $20 \leq L/D \leq 400$, $20 \leq L/D \leq 350$, $20 \leq L/D \leq 300$, $20 \leq L/D \leq 250$, $20 \leq L/D \leq 200$, $20 \leq L/D \leq 150$, $20 \leq L/D \leq 100$, or $20 \leq L/D \leq 50$. As an example, the ratio of the length to the diameter of the ceramic fiber material may be 20, 50, 100, 150, 200, 250, 300, 350, 400, 450, or 500.

In some implementations, the diameter of the ceramic fiber material satisfies: $D \leq 5 \mu m$; controlling the diameter of the ceramic fiber material within this range ensures the toughening effect of the ceramic fiber while further reducing the obstruction of the ceramic fiber to lithium ion transport pathways in the solid-state electrolyte, mitigating uneven ionic conduction at the lithium metal-solid-state electrolyte interface. If the diameter of the ceramic fiber material is too large, the ionic conductivity and the uniformity of ion transport pathways in the solid-state electrolyte membrane are significantly affected.

In some exemplary embodiments, the diameter of the ceramic fiber material satisfies: $0.5 \mu m \leq D \leq 2 \mu m$; for example, the range may be $0.6 \mu m \leq D \leq 2 \mu m$, $0.7 \mu m \leq D \leq 1.9 \mu m$, $0.8 \mu m \leq D \leq 1.8 \mu m$, $0.9 \mu m \leq D \leq 1.7 \mu m$, $1.0 \mu m \leq D \leq 1.6 \mu m$, $1.1 \mu m \leq D \leq 1.5 \mu m$, or $1.2 \mu m \leq D \leq 1.4 \mu m$. As an example, the diameter of the ceramic fiber material may be 0.5 $\mu m$, 0.8 $\mu m$, 1 $\mu m$, 1.3 $\mu m$, 1.5 $\mu m$, 1.7 $\mu m$, or 2 $\mu m$.

In some implementations, the length of the ceramic fiber material satisfies: $1 \mu m \leq L \leq 500 \mu m$; for example, the range may be $5 \mu m \leq L \leq 450 \mu m$, $5 \mu m \leq L \leq 400 \mu m$, $5 \mu m \leq L \leq 350 \mu m$, $5 \mu m \leq L \leq 300 \mu m$, $5 \mu m \leq L \leq 250 \mu m$, $5 \mu m \leq L \leq 200 \mu m$, $5 \mu m \leq L \leq 150 \mu m$, $5 \mu m \leq L \leq 100 \mu m$, or $5 \mu m \leq L \leq 50 \mu m$, with no specific limitation imposed. Controlling the length of the ceramic fiber material within this range allows the toughening effect of the ceramic fiber material to cover all regions of the solid-state electrolyte as much as possible, while also reducing or avoiding obstruction to ion transport pathways in the solid-state electrolyte. As an example, the length of the ceramic fiber material may include, but is not limited to, 1 $\mu m$, 5 $\mu m$, 10 $\mu m$, 50 $\mu m$, 100 $\mu m$, 150 $\mu m$, 200 $\mu m$, 250 $\mu m$, 300 $\mu m$, 350 $\mu m$, 400 $\mu m$, 450 $\mu m$, or 500 $\mu m$.

In some embodiments, the length of the ceramic fiber material satisfies: $10 \mu m \leq L \leq 200 \mu m$.

In some implementations, the ceramic fiber material includes one or more of silicon carbide fiber, silicon nitride fiber, boron nitride fiber, aluminum oxide fiber, and silicon dioxide fiber. Optionally, the ceramic fiber material is selected as aluminum oxide; and this selection enhances the toughening effect of the ceramic fiber material and improves the affinity of the ceramic fiber material with lithium metal at the solid-state electrolyte interface, enhancing the uniformity of ionic conduction.

In some implementations, the volume ratio of the ceramic fiber material to the solid-state electrolyte is (0.01-40):100; for example, the range may be (0.1-40):100, (0.5-38):100, (1-35):100, (3-30):100, (3-25):100, (3-20):100, (3-15):100, (3-10):100, or (3-5):100. When the volume ratio of the ceramic fiber material to the solid-state electrolyte is below this range, the mechanical properties and fracture toughness of the solid-state electrolyte may not be effectively improved; when the volume ratio of the ceramic fiber material to the solid-state electrolyte exceeds this range, the ceramic fiber material may occupy excessive volume of the solid-state electrolyte, reducing the distribution uniformity of bulk and interfacial ion transport pathways in the solid-state electrolyte, thereby inducing localized current density hotspots and lowering the critical current density of the solid-state electrolyte. When the volume ratio of the ceramic fiber material to the solid-state electrolyte falls within this range, the toughening effect of the ceramic fiber material is enhanced, and the critical current density of the solid-state electrolyte membrane increases, while ensuring ionic conductivity of the solid-state electrolyte.

In some implementations, the volume ratio of the ceramic fiber material to the solid-state electrolyte is (3-7):100.

As an example, the volume ratio of the ceramic fiber material to the solid-state electrolyte mentioned above may be measured using the following method: prepare an electrolyte disc with a diameter of 10 mm using an ultrasonic knife or slicing mold, observe the disc with a high-resolution X-ray tomography scanner, distinguish the ceramic fiber material from the solid-state electrolyte material based on grayscale values reflecting material electron density within pixels in the high-precision X-ray tomography results, and confirm the volume proportion of the ceramic fiber material in the solid-state electrolyte membrane/disc.

In some implementations, the mass ratio of the ceramic fiber material to the solid-state electrolyte is (0.01-85):100; for example, the range may be (0.1-85):100, (1-80):100, (1-75):100, (1-70):100, (1-65):100, (1-60):100, (1-55):100, (1-50):100, (1-45):100, (1-40):100, (1-35):100, (1-30):100, (1-25):100, (1-20):100, (1-15):100, or (1-10):100, with no specific limitation imposed.

In some exemplary embodiments, the mass ratio of the ceramic fiber material to the solid-state electrolyte is (2-15):100.

Using a sulfide electrolyte as an example, the mass ratio of the ceramic fiber material to the solid-state electrolyte mentioned above may be tested using the following method: weigh a piece of the solid-state electrolyte membrane/disc, dissolve the sulfide solid-state electrolyte using excess deionized water, filter the solution after the sulfide solid-state electrolyte is fully dissolved to obtain the ceramic fiber material, dry the ceramic fiber material thoroughly in a vacuum oven at 80°C, weigh the dried ceramic fiber material again, and divide the weight of the ceramic fiber material by the initial weight of the electrolyte membrane/disc to obtain the mass ratio of the ceramic fiber material in the solid-state electrolyte membrane/disc.

In some implementations, a distribution uniformity of the ceramic fiber material in the solid-state electrolyte is $\leq$ 0.3; for example, the range may be 0.05-0.3, 0.05-0.25, 0.05-0.2, 0.05-0.15, or 0.05-0.1. In some exemplary embodiments, the distribution uniformity of the ceramic fiber material in the solid-state electrolyte is $\leq$ 0.1. A smaller distribution uniformity of the ceramic fiber material in the solid-state electrolyte indicates a more uniform distribution, further enhancing the fracture toughness and mechanical strength of the solid-state electrolyte, suppressing cracking of the solid-state electrolyte, significantly increasing the critical current density of the solid-state electrolyte membrane, and improving the uniformity of ionic conduction at the lithium metal-solid-state electrolyte interface. As an example, the distribution uniformity of the ceramic fiber material in the solid-state electrolyte may be 0.05, 0.1, 0.15, 0.2, 0.25, or 0.3.

It should be noted that the distribution uniformity serves as an indicator describing the degree of uniform distribution of the ceramic fiber material in the solid-state electrolyte. The distribution uniformity between solid phases may generally be measured using methods such as grid counting, intercept method, area method, region method, or exclusive circle method.

The distribution uniformity of the ceramic fiber material in the solid-state electrolyte mentioned above in the present application may be tested using the intercept method: take a solid-state electrolyte membrane, prepare a cross-section with a neat fracture of the ceramic fiber material and the solid-state electrolyte using an ultrasonic knife method, observe the cross-section with a scanning electron microscope, distinguish the ceramic fiber material from the solid-state electrolyte based on material contrast in the backscattered electron imaging mode of the scanning electron microscope, and calculate the distribution uniformity based on image measurements.

Based on scanning electron microscope images, measure the distances $d_i$ (i = 1, 2, 3, ..., N) between cross-sections of the ceramic fiber material using the line analysis method, and calculate the standard deviation $\sigma_d$ of the N distances from $d_i$:

$$A0 = \frac{\sigma_d}{\overline{d}} = \sqrt{\frac{1}{N}\sum\left(\frac{d_i}{\overline{d}} - 1\right)^2}$$

.

A0 represents the distribution uniformity of the ceramic fiber material in the solid-state electrolyte, and d represents the average of the distances between the N cross-sections of the ceramic fiber material.

It should be noted that when measuring the distribution uniformity of the ceramic fiber material in the solid-state electrolyte, a cross-section with a neat fracture of the ceramic fiber and the solid-state electrolyte may also be prepared using the frozen ion beam polishing method.

In some implementations, the solid-state electrolyte membrane further includes a binder distributed therein.

In some embodiments, the binder includes one or more of nitrile rubber, polyvinylidene fluoride, polytetrafluoroethylene, polyacrylic acid, polyvinyl alcohol, polyimide, polyacrylonitrile, polyurethane, polycarboxymethyl cellulose, cyclodextrin, sodium alginate, polysaccharide, nitrile rubber, and styrene-butadiene rubber.

In some implementations, a mass ratio of the binder to the solid-state electrolyte is (0.01-20):100; for example, the range may be (0.1-20):100, (0.3-18):100, (0.3-15):100, (0.3-12):100, (0.3-10):100, (0.3-7):100, or (0.3-5):100, with no specific limitation imposed.

In some exemplary embodiments, the mass ratio of the binder to the solid-state electrolyte is (0.5-5):100.

In some implementations, the inorganic solid-state electrolyte includes one of a lithium-ion solid-state electrolyte, a sodium-ion solid-state electrolyte, or a potassium-ion solid-state electrolyte.

As an example, the lithium-ion solid-state electrolyte includes one or more of LISICON-type solid-state electrolyte, NASICON-type lithium-ion solid-state electrolyte, Garnet-type solid-state electrolyte, LIPON-type solid-state electrolyte, Perovskite-type solid-state electrolyte, Anti-Perovskite-type lithium-ion solid-state electrolyte, Thio-LISICON-type solid-state electrolyte, $Li_{10}GeP_2S_{12}$-type solid-state electrolyte, $(100-e)Li_2S \cdot e(F2) \cdot f(G2)$-type solid-state electrolyte, Argyrodite-type solid-state electrolyte, Halide-type solid-state electrolyte, and Hydride-type lithium-ion solid-state electrolyte; where in the $(100-e)Li_2S \cdot e(F2) \cdot f(G2)$-type solid-state electrolyte, $20 \leq e \leq 30$, $0 \leq f \leq 50$, F2 includes one or more of $B_2S_3$, $Al_2S_3$, $In_2S_3$, $SiS_2$, $GeS_2$, $SnS_2$, $P_2S_5$, $As_2S_3$, $Sb_2S_5$, $Bi_2S_3$, $WS_2$, and $MoS_2$, and G2 includes one or more of $B_2O_3$, $Al_2O_3$, $In_2O_3$, $SiO_2$, $GeO_2$, $SnO_2$, $P_2O_5$, $Sb_2O_5$, $Bi_2O_3$, $WO_2$, $WO_3$, $MoO_2$, $MoO_3$, $Fe_2O_3$, ZnO, MgO, CuO, CaO, LiN, $Li_2O$, LiF, LiCl, LiBr, and LiI; the sodium-ion solid-state electrolyte includes one or more of NASICON-type sodium-ion solid-state electrolyte, Na-β-Alumina-type solid-state electrolyte, $Na_3PS_4$-type solid-state electrolyte, $Na_{11}Sn_2PS_{12}$-type solid-state electrolyte, anti-perovskite-type solid-state electrolyte, and Hydride-type sodium-ion solid-state electrolyte; the potassium-ion solid-state electrolyte includes one or more of β-Alumina-type potassium-ion solid-state electrolyte, Anti-Perovskite-type potassium-ion solid-state electrolyte, $K_2Fe_4O_7$-type solid-state electrolyte, and $KSi_2P_3$-type solid-state electrolyte.

As an example, Garnet-type solid-state electrolyte includes $Li_{7-a}La_3Zr_{2-a}(A2)_aO_{12}$; where $0 \leq a < 1$; A2 includes one or more of Sb, Nb, Ta, Te, and W.

Thio-LISICON-type solid-state electrolyte includes $Li_{3+6}(B2)_c(C2)_{1-c}(D2)_{4-d}(E2)_d$; where $-1 < b < 2$, $0 \leq c \leq 1$, $0 \leq d \leq 2$; B2 includes one or more of B, Al, In, Si, Ge, Sn, Ti, W, and Mo; C2 includes one or more of P, As, Sb, and Bi; D2 includes one or more of S and Se; E2 includes one or more of F, Cl, Br, and I.

Argyrodite-type solid-state electrolyte includes $Li_{6+g}(H2)_h(I2)_{1-h}(J2)_{5-i}(K2)_{1+i}$; where $-1 \leq g \leq 1$, $0 \leq h \leq 1$, $-1 \leq i \leq 1$; H2 includes one or more of B, Al, In, Si, Ge, Sn, Ti, W, and Mo; I2 includes one or more of P, As, Sb, and Bi; J2 represents one or more of S and Se; K2 includes one or more of F, Cl, Br, and I.

LISICON-type solid-state electrolyte includes $\gamma$-$Li_3PO_4$.

NASICON-type lithium-ion solid-state electrolyte includes $Li_{1+j}(L2)_j(M2)_{2-j}(PO_4)_3$, where $0 \leq j < 1$; L2 includes one or more of Al, Cr, Ba, Fe, Sc, In, Lu, Y, and La; and M2 includes one or more of Ti and Ge.

Perovskite-type solid-state electrolyte includes $Li_{3k}(N2)_{2/3-k}(Q2)O_3$, where $0.04 < k < 0.17$; N2 includes one or more of La, Sr, Ba, and Nd; Q2 includes one or more of Al, Ti, and Ge.

Anti-Perovskite-type lithium-ion solid-state electrolyte includes $Li_3OCl$.

$Li_{10}GeP_2S_{12}$-type solid-state electrolyte includes $Li_{10+l}(R2)_{1+m}(S2)_{2-m}(T2)_{12-n}(U2)_n$, where $-2 < 1 < 2$, $0 \leq m \leq 2$, $0 \leq n \leq 2$; R2 includes one or more of B, Al, In, Si, Ge, Sn, Ti, W, and Mo; S2 includes one or more of P, As, Sb, and Bi; T2 includes one or more of S and Se; and U2 includes one or more of F, Cl, Br, and I.

Halide-type solid-state electrolyte includes one or more of $Li_3(V2)(W2)_6$ and $Li_2Sc_{2/3}(W2)_4$; where V2 includes one or more of Y, Er, In, Sc, and Ga; and W2 includes one or more of F, Cl, Br, and I.

Hydride-type lithium-ion solid-state electrolyte includes one or more of $LiBH_4$ and $pLi(CB_9H_{10}) \cdot (1-p)Li(CB_{11}H_{12})$; where $0 < p < 1$.

LIPON-type solid-state electrolyte includes $Li_qPO_rN_s$, where $2r + 3s - q = 5$, $q \geq 1$, $r \geq 1$, and $s \geq 0$.

NASICON-type sodium-ion solid-state electrolyte includes $Na_{1+t+2u}Zr_{2-u}(A3)_uP_{3-t}Si_tO_{12}$; where $0 \leq t \leq 3$, $0 \leq u \leq 1$; and A3 includes one or more of Zn, Mg, and Ca.

Na-β-Alumina-type solid-state electrolyte includes one or more of $Na_2O\cdot(5-7)Al_2O_3$ and $Na_2O\cdot(8-11)Al_2O_3$.

$Na_3PS_4$-type solid-state electrolyte includes $Na_{3+x}(B3)_y(C3)_{1-v}(D3)_{4-w}(E3)_w$, where $-1 < x < 2, 0 \leq v \leq 1, 0 \leq w \leq 2$; B3 includes one or more of B, Al, In, Si, Ge, Sn, Ti, W, and Mo; C3 includes one or more of P, As, Sb, and Bi; D3 includes one or more of S and Se; and E3 includes one or more of F, Cl, Br, and I.

$Na_{11}Sn_2PS_{12}$-type solid-state electrolyte includes $Na_{11+(x1)}(F3)_{2-y}(G3)_{1+y}(H3)_{12-z}(J3)_z$, where $-1 < x_1 < 1, 0 \leq y \leq 2, 0 \leq z \leq 2$; F3 includes one or more of B, Al, In, Si, Ge, Sn, Ti, W, and Mo; G3 includes one or more of P, As, Sb, and Bi; H3 includes one or more of S and Se; and J3 includes one or more of F, Cl, Br, and I.

Anti-perovskite-type solid-state electrolyte includes $Na_3O(K3)$, where K3 includes one or more of Cl, Br, I, and $BH_4$.

Hydride-type sodium-ion solid-state electrolyte includes $Na_2C_{(b1)}B_{(a1)-(b1)}H_{(b1)}$ and $Na(BH_4)_{0.5}(NH_2)_{0.5}$, where a1 = 10 or 12, and b1 = 0 or 1.

β-Alumina-type potassium-ion solid-state electrolyte includes $K_2O\cdot(8-11)Al_2O_3$.

Anti-Perovskite-type potassium-ion solid-state electrolyte includes $K_3OI$.

$K_2Fe_4O_7$-type solid-state electrolyte includes $K_2Fe_4O_7$.

$KSi_2P_3$-type solid-state electrolyte includes $KSi_2P_3$.

In some implementations, the critical current density of the solid-state electrolyte membrane at 25°C is 0.5 $mA/cm^2$-10 $mA/cm^2$.

It should be noted that the critical current density refers to the minimum current density at which dendrites and short circuits occur when the solid-state electrolyte membrane undergoes electrochemical deposition with a corresponding alkali metal electrode. In other words, when the solid-state electrolyte membrane undergoes electrochemical deposition below the critical current density, dendrites and short circuits do not occur. The critical current density serves as a core indicator describing the ability of the solid-state electrolyte membrane to suppress dendrites and short circuits.

As an example, the critical current density of the solid-state electrolyte membrane mentioned above may be measured using the traditional symmetrical battery step-current density cycling method: at 25°C, place two 8 mm dendritic, 50 μm thick lithium metal discs symmetrically at the center on both sides of the solid-state electrolyte membrane, apply mechanical pressure to ensure tight contact between the lithium metal discs and the solid-state electrolyte membrane, form a lithium/solid-state electrolyte membrane/lithium symmetrical battery; assemble and encapsulate the symmetrical battery, start the lithium/solid-state electrolyte membrane/lithium symmetrical battery at 0.25 $mA/cm^2$, deposit and strip 1 $mAh/cm^2$ of lithium on one side sequentially, then increase the current to 0.5 $mA/cm^2$, maintain deposition and stripping at an areal capacity of 1 $mAh/cm^2$, and incrementally increase the current by 0.25 $mA/cm^2$ steps at 0.75 $mA/cm^2$, 1.0 $mA/cm^2$, 1.25 $mA/cm^2$, and so forth up to 10 $mA/cm^2$, and record the current density at which the voltage drops suddenly and significantly as the critical current density.

In some implementations, the fracture toughness of the solid-state electrolyte membrane is 0.05 MPa m^(1/2)-2 MPa m^(1/2).

It should be noted that the fracture toughness serves as a parameter describing the ability of the solid-state electrolyte membrane to absorb strain energy before fracturing. Higher fracture toughness indicates a stronger resistance to crack propagation, reflecting the ability of the solid-state electrolyte membrane to resist cracking and short circuits caused by dendrites.

As an example, the fracture toughness of the solid-state electrolyte membrane mentioned above may be tested using the Vickers conical indentation experiment: in an argon atmosphere, polish the surface of the solid-state electrolyte membrane with sandpaper progressively from 800 grit to 2000 grit, 4000 grit, and 8000 grit until the surface of the solid-state electrolyte membrane exhibits mirror-like characteristics with no obvious defects; then, perform an indentation test on the polished surface using a Vickers conical indentation tester; apply an appropriate load to drive the indentation tester until radial cracks appear at the four corners of the conical indentation; calculate the fracture toughness value $K_{IC}$ using the following formula based on the indentation load S, the extension length L of the radial cracks, and the Vickers hardness $H_V$:

$$K_{IC} = 0.016 \left(\frac{E}{H_V}\right)^{\frac{1}{2}} \left(\frac{S}{L^{\frac{3}{2}}}\right) \left(MPa \cdot \sqrt{m}\right)$$

E represents the Young's modulus of the solid-state electrolyte membrane.

In some implementations, the ionic conductivity of the solid-state electrolyte membrane at 25°C is 0.1 $mS/cm^2$-10 $mS/cm^2$.

It should be noted that the ionic conductivity serves as a core indicator measuring the ability of the solid-state electrolyte membrane to conduct corresponding alkali metal ions.

The ionic conductivity of the solid-state electrolyte membrane mentioned above may be measured using the following method: at 25°C, clamp the solid-state electrolyte membrane tightly between two 10 mm-diameter cylindrical stainless steel current collectors in a battery mold under mechanical pressure, connect the current collectors to an electrochemical workstation, and perform an electrochemical impedance test on the solid-state electrolyte membrane with a bias voltage of 10 mV and a frequency range of $10^6$ Hz to 0.1 Hz. Use the Z' coordinate value of the point closest to the Z' axis in the low-frequency segment of the electrochemical impedance spectrum curve, from right to left, as the resistance R, and calculate the ionic conductivity σ using the following formula:

$$\sigma = \frac{1}{R} \cdot \frac{D}{A}$$

D represents the thickness of the solid-state electrolyte membrane, and A represents the contact area between the solid-state electrolyte membrane and the current collectors.

In some implementations, the thickness of the solid-state electrolyte membrane is 1 μm-1000 μm.

As an example, the thickness of the solid-state electrolyte membrane mentioned above may be measured using the following method: calibrate a micrometer, place the solid-state electrolyte membrane between two anvils, gently rotate the sleeve until a sound is heard, and record the reading as the thickness of the solid-state electrolyte membrane.

The present application also provides a preparation method of a solid-state electrolyte membrane, including the following steps: mix the ceramic fiber material and the solid-state electrolyte to prepare a mixture; and perform a forming process on the mixture to prepare the solid-state electrolyte membrane.

In some implementations, dry mixing is used to mix the ceramic fiber material and the solid-state electrolyte. As an example, the mixing time is 1 h-24 h. For example, the range may be 3 h-24 h, 5 h-20 h, 7 h-18 h, 10 h-15 h, or 10 h-12 h, with no specific limitation imposed.

In some implementations, the forming process involves pressure treatment. In some exemplary embodiments, a pressure of the pressure treatment is 200 MPa-600 MPa. For example, the range may be 250 MPa-600 MPa, 250 MPa-550 MPa, 300 MPa-500 MPa, 350 MPa-450 MPa, or 400 MPa-450 MPa, with no specific limitation imposed.

As an example, the preparation method of the solid-state electrolyte membrane includes: weigh the ceramic fiber material powder and the solid-state electrolyte powder separately, perform dry mixing to obtain a mixture; and press the mixture into a sheet form using a mold under mechanical flat pressing to obtain the solid-state electrolyte membrane.

In some implementations, wet mixing is used to mix the ceramic fiber material and the solid-state electrolyte. In some embodiments, the mixing time is 0.5 h-12 h. For example, the range may be 1 h-12 h, 2 h-11 h, 3 h-10 h, 4 h-9 h, 5 h-8 h, or 6 h-7 h, with no specific limitation imposed.

In some implementations, the forming process includes applying the mixture to form a film followed by drying.

As an example, the preparation method of the solid-state electrolyte membrane includes: weigh the ceramic fiber material powder and the solid-state electrolyte powder separately, add the ceramic fiber material powder to the solid-state electrolyte powder, then add a solvent and a binder for wet mixing to prepare a mixture; and apply the mixture to form a continuous electrolyte film, dry the film, and obtain the solid-state electrolyte membrane.

Raw materials not specifically described above are all commercially available.

The present application also provides an all-solid-state battery including the solid-state electrolyte membrane described above.

As a result, the obtained all-solid-state battery exhibits good fast charging performance.

The all-solid-state battery, battery module, battery pack, and electric apparatus of the present application are described below with appropriate reference to the accompanying drawings.

An embodiment of the present application provides an all-solid-state battery.

Typically, an all-solid-state battery includes a positive electrode plate, a negative electrode plate, and a solid-state electrolyte membrane. During charging and discharging of the battery, active ions intercalate and deintercalate back and forth between the positive electrode plate and the negative electrode plate. The solid-state electrolyte membrane conducts ions between the positive electrode plate and the negative electrode plate.

Positive electrode plate:

The positive electrode plate includes a positive electrode current collector and a positive electrode film layer provided on at least one surface of the positive electrode current collector, where the positive electrode film layer includes a positive electrode active material.

For example, the positive electrode current collector has two opposite surfaces in a thickness direction of the positive electrode current collector, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by depositing a metal material on a polymer material substrate. The metal material includes but is not limited to aluminum, aluminum alloy, nickel, nickel alloy, titanium, titanium alloy, silver, and silver alloy. The polymer material substrate includes but is not limited to polypropylene (PP), polyethylene terephthalate (PET), polybutylene terephthalate (PBT), polystyrene (PS), and polyethylene (PE).

In some embodiments, the positive electrode active material may include a positive electrode active material well-known in the art and used for batteries. For example, the positive electrode active material may include at least one of the following materials: olivine-structured lithium-containing phosphate, lithium transition metal oxide, or respective modified compounds thereof. However, the present application is not limited to such materials, and other conventional well-known materials that may be used as positive electrode active materials for batteries may alternatively be used. One of these positive electrode active materials may be used alone, or two or more may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.80}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon. The weight percentage of the positive electrode active material in the positive electrode film layer is 80-100% by weight based on a total weight of the positive electrode film layer.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20% by weight based on a total weight of the positive electrode film layer.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber. The weight percentage of the conductive agent in the positive electrode film layer is 0-20% by weight based on a total weight of the positive electrode film layer.

In some implementations, the positive electrode film layer further optionally includes an electrolyte. As an example, the electrolyte may include one of a lithium-ion solid-state electrolyte, a sodium-ion solid-state electrolyte, and a potassium-ion solid-state electrolyte.

In some embodiments, the lithium-ion solid-state electrolyte includes one or more of LISICON-type solid-state electrolyte, NASICON-type lithium-ion solid-state electrolyte, Garnet-type solid-state electrolyte, LIPON-type solid-state electrolyte, Perovskite-type solid-state electrolyte, Anti-Perovskite-type lithium-ion solid-state electrolyte, Thio-LISICON-type solid-state electrolyte, $Li_{10}GeP_2S_{12}$-type solid-state electrolyte, $(100-e)Li_2S \cdot e(F2) \cdot f(G2)$-type solid-state electrolyte, Argyrodite-type solid-state electrolyte, Halide-type solid-state electrolyte, and Hydride-type lithium-ion solid-state electrolyte; where in the $(100-e)Li_2S \cdot e(F2) \cdot f(G2)$-type solid-state electrolyte, $20 \leq e \leq 30$, $0 \leq f \leq 50$, F2 includes one or more of $B_2S_3$, $Al_2S_3$, $In_2S_3$, $SiS_2$, $GeS_2$, $SnS_2$, $P_2S_5$, $As_2S_3$, $Sb_2S_5$, $Bi_2S_3$, $WS_2$, and $MoS_2$, and G2 includes one or more of $B_2O_3$, $Al_2O_3$, $In_2O_3$, $SiO_2$, $GeO_2$, $SnO_2$, $P_2O_5$, $Sb_2O_5$, $Bi_2O_3$, $WO_2$, $WO_3$, $MoO_2$, $MoO_3$, $Fe_2O_3$, **ZnO,** MgO, CuO, CaO, LiN, $Li_2O$, LiF, LiCl, LiBr, and LiI; the sodium-ion solid-state electrolyte includes one or more of NASICON-type sodium-ion solid-state electrolyte, Na-β-Alumina-type solid-state electrolyte, $Na_3PS_4$-type solid-state electrolyte, $Na_{11}Sn_2PS_{12}$-type solid-state electrolyte, anti-perovskite-type solid-state electrolyte, and Hydride-type sodium-ion solid-state electrolyte; the potassium-ion solid-state electrolyte includes one or more of β-Alumina-type potassium-ion solid-state electrolyte, Anti-Perovskite-type potassium-ion solid-state electrolyte, $K_2Fe_4O_7$-type solid-state electrolyte, and $KSi_2P_3$-type solid-state electrolyte.

In some implementations, the positive electrode plate may be prepared as follows: disperse the components for preparing the positive electrode plate, such as the positive electrode active material, conductive agent, binder, electrolyte, and any other components, in a solvent (for example, N-methylpyrrolidone) to form a positive electrode slurry, where the solid content of the positive electrode slurry is 40wt%-80wt%, and the viscosity at room temperature is adjusted to 5000 mPa·s-25000 mPa·s; apply the positive electrode slurry on both surfaces of the positive electrode current collector, dry the coated material, and cold press the material using a cold rolling machine to form the positive electrode plate; the single-side coating surface density of the positive electrode powder is 150 $g/m^2$-350 $g/m^2$, and the compacted density of the positive electrode plate is $1.5\,g/cm^3$-$3.6\,g/cm^3$, optionally $2.5\,g/cm^3$-$3.5\,g/cm^3$. Calculate the compacted density using the formula:

compacted density = coating surface density/(thickness of electrode plate after pressing - thickness of current collector).

Negative electrode plate:

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in a thickness direction of the negative electrode current collector, and the negative electrode film layer is disposed on either or both of the two opposite surfaces of the negative electrode current collector.

In some embodiments, the negative electrode current collector may be a metal foil or a composite current collector. For example, the metal foil may be a copper foil. The composite current collector may include a polymer material substrate and a metal layer formed on at least one surface of the polymer material substrate. The composite current collector may be formed by depositing a metal material on a polymer material substrate. The metal material includes but is not limited to copper, copper alloys, nickel, nickel alloys, titanium, titanium alloys, silver, and silver alloys, and the polymer material substrate includes but is not limited to a substrate such as polypropylene (PP), polyethylene terephthalate (PET), polybutylene terephthalate (PBT), polystyrene (PS), and polyethylene (PE).

In some embodiments, the negative electrode active material may be a negative electrode active material well-known in the art and used for batteries. As an example, the negative electrode active material may include at least one of the following materials: artificial graphite, natural graphite, soft carbon, hard carbon, silicon-based material, tin-based material, lithium titanate, lithium metal, and lithium alloy. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, the present application is not limited to these materials, and other conventional materials that may be used as negative electrode active materials for batteries may alternatively be used. One of these negative electrode active materials may be used alone, or two or more may be used in combination. The weight percentage of the negative electrode active material in the negative electrode film layer is 70-100% by weight based on a total weight of the negative electrode film layer.

In some embodiments, the negative electrode film layer further optionally includes a binder. The binder may be selected from at least one of nitrile rubber (NBR), polyvinylidene fluoride (PVDF), styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight percentage of the binder in the negative electrode film layer is 0-30% by weight based on a total weight of the negative electrode film layer.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber. The weight percentage of the conductive agent in the negative electrode film layer is 0-20% by weight based on a total weight of the negative electrode film layer.

In some implementations, the negative electrode film layer further optionally includes an electrolyte. The electrolyte may be selected from one of a lithium-ion solid-state electrolyte, a sodium-ion solid-state electrolyte, and a potassium-ion solid-state electrolyte.

Optionally, the lithium-ion solid-state electrolyte includes one or more of LISICON-type solid-state electrolyte, NASICON-type lithium-ion solid-state electrolyte, Garnet-type solid-state electrolyte, LIPON-type solid-state electrolyte, Perovskite-type solid-state electrolyte, Anti-Perovskite-type lithium-ion solid-state electrolyte, Thio-LISICON-type solid-state electrolyte, $Li_{10}GeP_2S_{12}$-type solid-state electrolyte, $(100-e)Li_2S \cdot e(F2) \cdot f(G2)$-type solid-state electrolyte, Argyrodite-type solid-state electrolyte, Halide-type solid-state electrolyte, and Hydride-type lithium-ion solid-state electrolyte; where in the $(100-e)Li_2S \cdot e(F2) \cdot f(G2)$-type solid-state electrolyte, $20 \leq e \leq 30$, $0 \leq f \leq 50$, F2 includes one or more of $B_2S_3$, $Al_2S_3$, $In_2S_3$, $SiS_2$, $GeS_2$, $SnS_2$, $P_2S_5$, $As_2S_3$, $Sb_2S_5$, $Bi_2S_3$, $WS_2$, and $MoS_2$, and G2 includes one or more of $B_2O_3$, $Al_2O_3$, $In_2O_3$, $SiO_2$, $GeO_2$, $SnO_2$, $P_2O_5$, $Sb_2O_5$, $Bi_2O_3$, $WO_2$, $WO_3$, $MoO_2$, $MoO_3$, $Fe_2O_3$, $ZnO$, $MgO$, $CuO$, $CaO$, $LiN$, $Li_2O$, $LiF$, $LiCl$, $LiBr$, and $LiI$; the sodium-ion solid-state electrolyte includes one or more of NASICON-type sodium-ion solid-state electrolyte, Na-$\beta$-Alumina-type solid-state electrolyte, $Na_3PS_4$-type solid-state electrolyte, $Na_{11}Sn_2PS_{12}$-type solid-state electrolyte, anti-perovskite-type solid-state electrolyte, and Hydride-type sodium-ion solid-state electrolyte; the potassium-ion solid-state electrolyte includes one or more of $\beta$-Alumina-type potassium-ion solid-state electrolyte, Anti-Perovskite-type potassium-ion solid-state electrolyte, $K_2Fe_4O_7$-type solid-state electrolyte, and $KSi_2P_3$-type solid-state electrolyte.

In some implementations, the negative electrode film layer further optionally includes other additives, such as a thickener; and the thickener may include but is not limited to sodium carboxymethyl cellulose (CMC-Na). The weight percentage of other additives in the negative electrode film layer is 0-15% by weight based on a total weight of the negative electrode film layer.

In some embodiments, the negative electrode plate may be prepared as follows: disperse the components for preparing the negative electrode plate, such as the negative electrode active material, conductive agent, binder, and any other components, in a solvent (for example, deionized water) to form a negative electrode slurry, where the solid content of the negative electrode slurry is 30wt%-70wt%, and the viscosity at room temperature is adjusted to 2,000 mPa·s-10,000 mPa·s; apply the resulting negative electrode slurry on a surface of a negative electrode current collector, dry the coated applied material, and perform cold pressing such as rolling to produce the negative electrode plate. The single-side coating surface density of the negative electrode powder is 5 g/m$^2$-220 g/m$^2$, and the compacted density of the negative electrode plate is 1.2 g/m$^3$-2.0 g/m$^3$.

In some implementations, the positive electrode plate, negative electrode plate, and solid-state electrolyte membrane may be made into an electrode assembly through a winding process or a lamination process.

In some embodiments, the all-solid-state battery may include an outer package. The outer package may be used to encapsulate the electrode assembly and the solid-state electrolyte membrane described above.

In some embodiments, the outer package of the all-solid-state battery may be a hard shell, for example, a hard plastic shell, an aluminum shell, or a steel shell. The outer package of the all-solid-state battery may alternatively be a soft pack, for example, a soft pouch. The material of the soft pack may be plastic. Examples of the plastic include polypropylene, polybutylene terephthalate, and polybutylene succinate.

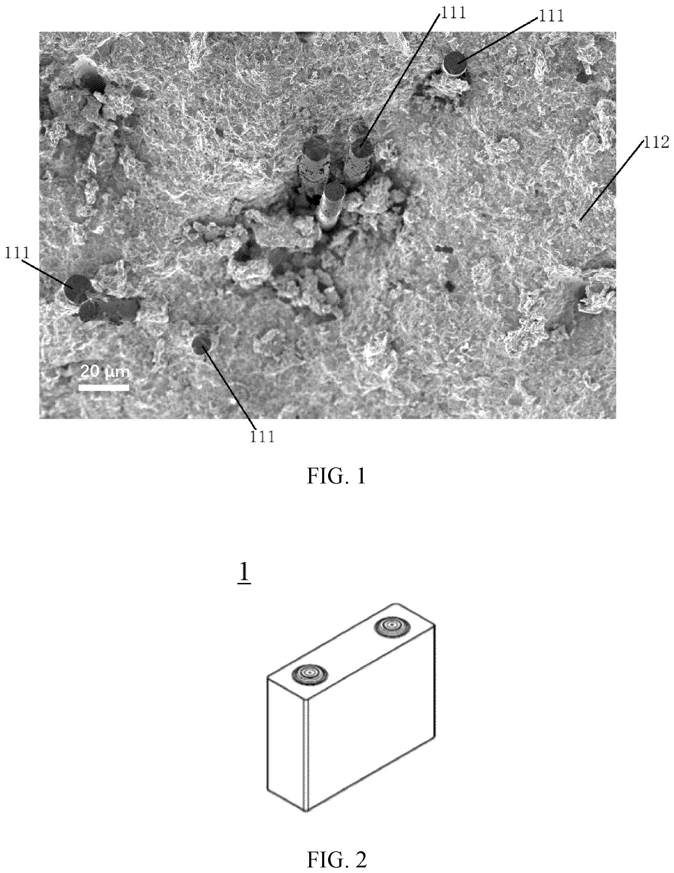

The present application imposes no special limitations on the shape of the all-solid-state battery, which may be cylindrical, rectangular, or any other shape. For example, FIG. 2 shows an all-solid-state battery 1 with a rectangular structure as an example.

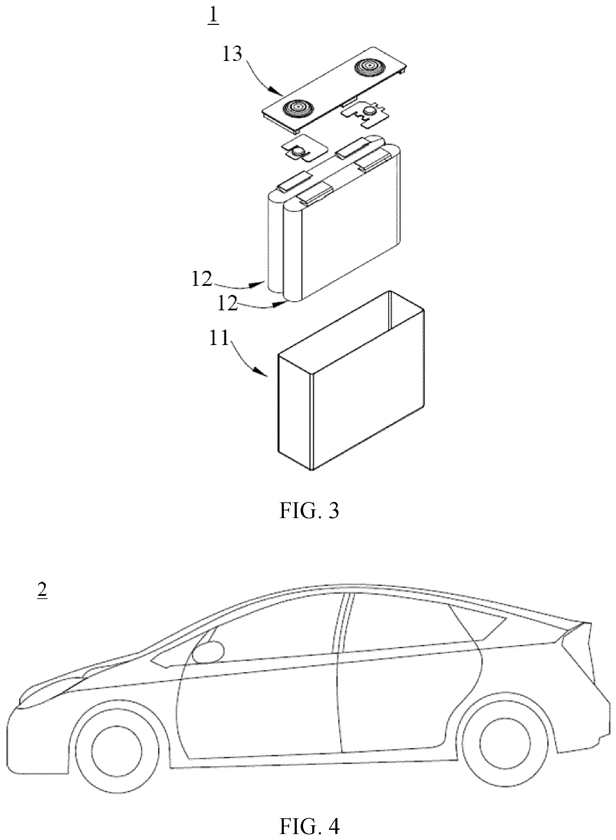

In some embodiments, referring to FIG. 3, the outer package may include a housing 11 and a cover plate 13. The housing 11 may include a base plate and side plates connected to the base plate, where the base plate and the side plates enclose an accommodating cavity. The housing 11 has an opening communicating with the accommodating cavity, and the cover plate 13 may cover the opening to close the accommodating cavity.

A positive electrode plate, a negative electrode plate, and a solid-state electrolyte membrane may be made into an electrode assembly 12 through winding or lamination. The electrode assembly 12 is packaged in the accommodating cavity. The number of electrode assemblies 12 contained in the all-solid-state battery 1 may be one or more, adjustable based on requirements.

In some embodiments, the all-solid-state battery may be assembled into a battery module, where the number of all-solid-state batteries contained in the battery module may be multiple, and the specific number may be adjusted based on the application and capacity of the battery module.

In the battery module, multiple all-solid-state batteries may be sequentially arranged along the length direction of the battery module. Alternatively, the all-solid-state batteries may be arranged in any other manner. Further, the multiple all-solid-state batteries may be secured using fasteners.

Optionally, the battery module may further include a housing with an accommodating space, where the plurality of all-solid-state batteries are accommodated in the accommodating space.

In some embodiments, the battery modules may be further assembled into a battery pack, where the number of battery modules included in the battery pack may be adjusted based on the application and capacity of the battery pack.

The battery pack may include a battery box and a plurality of battery modules arranged in the battery box. The battery box includes an upper box body and a lower box body. The upper box body may cover the lower box body to form an enclosed space for accommodating the battery modules. The plurality of battery modules may be arranged in the battery box in any manner.

Electric apparatus

The present application also provides an electric apparatus including at least one of the all-solid-state battery, battery module, or battery pack described above. The all-solid-state battery, battery module, or battery pack may be used as a power source of the apparatus or as an energy storage unit of the apparatus. The apparatus may include, but is not limited to, mobile devices, electric vehicles, electric trains, ships, satellites, and energy storage systems; where mobile devices may include but are not limited to at least one of mobile phones and notebook computers; electric vehicles may include but are not limited to at least one of battery electric vehicles, hybrid electric vehicles, plug-in hybrid electric vehicles, electric bicycles, electric scooters, electric golf carts, and electric trucks.

A secondary battery, battery module, or battery pack may be selected for the apparatus based on requirements for using the apparatus.

FIG. 4 shows an electric apparatus 2 as an example. This electric apparatus 2 is a battery electric vehicle, a hybrid electric vehicle, a plug-in hybrid electric vehicle, or similar. To meet requirements of the apparatus for high power and high energy density of secondary batteries, a battery pack or a battery module may be used.

As another example, the apparatus may be a mobile phone, a tablet computer, or a notebook computer. Such apparatus is usually required to be light and thin, for which the all-solid-state battery may be used as a power source.

The following further describes beneficial effects of the present application with reference to examples.

To describe the technical problems solved by the present application, technical solutions, and beneficial effects of the present application more clearly, further description is made in detail below with reference to the embodiments and accompanying drawings. Apparently, the described embodiments are merely some but not all of the embodiments of the present application. The following description of at least one exemplary embodiment is merely illustrative and is not construed as any limitation on the present application or on the use of the present application. All other embodiments obtained by a person of ordinary skill in the art based on the embodiments of the present application without creative efforts fall within the protection scope of the present application.

Examples whose technical solutions or conditions are not specified are made in accordance with technical solutions or conditions described in the literature in the field or made in accordance with product instructions. Reagents or instruments used are all conventional products commercially available if no manufacturer is indicated.

I. Preparation of solid-state electrolyte membrane

Example 1

Silicon carbide (as the ceramic fiber material) powder and $Li_6PS_5Cl$ (as the solid-state electrolyte) powder were weighed, followed by dry mixing to obtain a mixture; the mixture was pressed into a sheet form using a mold under mechanical flat pressing to obtain the solid-state electrolyte membrane. The dry mixing time was 0.5 h, and the pressure was 500 MPa.

Examples 2 to 23

The preparation method of the solid-state electrolyte membrane in Examples 2 to 23 was substantially the same as that in Example 1, with the main differences being one or more of the following: the type of ceramic fiber material, the diameter of the ceramic fiber material, the aspect ratio of the ceramic fiber material, the volume proportion of the ceramic fiber material in the solid-state electrolyte membrane, the type of solid-state electrolyte, the distribution uniformity of the ceramic fiber material in the solid-state electrolyte membrane, the dry mixing time, and the pressure of the pressure treatment; specific details for Examples 2 to 15 were provided in Table 1-1, and specific details for Examples 16 to 23 were provided in Table 1-2.

Example 24

Silicon carbide (as the ceramic fiber material) powder and $Li_7La_3Zr_2O_{12}$ (as the solid-state electrolyte) powder were weighed, the silicon carbide powder was added to the $Li_6PS_5Cl$ powder, then p-xylene (as the solvent) and nitrile rubber (as the binder) were added for wet mixing to prepare a mixture; and the mixture was applied to form a continuous electrolyte film, the film was dried, and the solid-state electrolyte membrane was obtained. The wet mixing time was 3 h; and specific details were provided in Table 1-2.

Example 25

The preparation method of the solid-state electrolyte membrane in Example 25 was substantially the same as that in Example 24, with the main differences being one or more of the following: the type of ceramic fiber material, the diameter of the ceramic fiber material, the aspect ratio of the ceramic fiber material, the volume proportion of the ceramic fiber material in the solid-state electrolyte membrane, the type of solid-state electrolyte, the distribution uniformity of the ceramic fiber material in the solid-state electrolyte membrane, the wet mixing time, the type of binder, and the mass proportion of the binder in the solid-state electrolyte membrane; and specific details were provided in Table 1-2.

Comparative example 1

In Comparative example 1, no ceramic fiber material was added; only $Li_6PS_5Cl$ (as the solid-state electrolyte) powder was used, and the mixture was pressed into a sheet form using a mold under mechanical flat pressing to obtain the solid-state electrolyte membrane. Specific details were provided in Table 1-2.

Comparative example 2

The preparation method of the solid-state electrolyte membrane in Comparative example 2 was substantially the same as that in Example 2, with the difference being the length and aspect ratio of the ceramic fiber material. Specific details were provided in Table 1-2.

**Table 1-1**

| Group | Ceramic fiber material | | | | | | Solid-state electrolyte | Dry approach | | Wet approach | | | Electrolyte membrane thickness ($\mu$m) |
| | Type | D ($\mu$m) | L ($\mu$m) | L/D | n1 | A0 | | Mixing time | Pressure of pressure | Mixing time | Binder | n2 | |
|---|---|---|---|---|---|---|---|---|---|---|---|---|---|
| Example 1 | SiC | 0.5 | 10 | 20 | 5:100 | 0.5 | $Li_6PS_5Cl$ | 0.5 h | 500 MPa | / | / | / | 1,000 |
| Example 2 | SiC | 0.5 | 10 | 20 | 5:100 | 0.05 | $Li_6PS_5Cl$ | 6h | 500 MPa | | / | / | 1,000 |
| Example 3 | SiC | 0.5 | 10 | 20 | 1:100 | 0.05 | $Li_6PS_5Cl$ | 6h | 500 MPa | / | / | / | 1,000 |
| Example 4 | SiC | 0.5 | 10 | 20 | 20:100 | 0.05 | $Li_6PS_5Cl$ | 6h | 500 MPa | / | / | / | 1,000 |
| Example 5 | SiC | 0.5 | 10 | 20 | 3:100 | 0.05 | $Li_6PS_5Cl$ | 6h | 500 MPa | / | / | / | 1,000 |
| Example 6 | SiC | 0.5 | 10 | 20 | 7:100 | 0.05 | $Li_6PS_5Cl$ | 6h | 500 MPa | / | / | / | 1,000 |
| Example 7 | SiC | 0.5 | 10 | 20 | 30:100 | 0.05 | $Li_6PS_5Cl$ | 6h | 500 MPa | / | / | / | 1,000 |
| Example 8 | SiC | 0.5 | 10 | 20 | 40:100 | 0.05 | $Li_6PS_5Cl$ | 6h | 500 MPa | / | / | / | 1,000 |
| Example 9 | SiC | 0.5 | 10 | 20 | 0.01:100 | 0.05 | $Li_6PS_5Cl$ | 6h | 500 MPa | / | / | / | 1,000 |
| Example 10 | SiC | 0.5 | 10 | 20 | 0.005:100 | 0.05 | $Li_6PS_5Cl$ | 6h | 500 MPa | | / | / | 1,000 |
| Example 11 | SiC | 0.5 | 10 | 20 | 43:100 | 0.05 | $Li_6PS_5Cl$ | 6h | 500 MPa | / | / | / | 1,000 |
| Example 12 | $Al_2O_3$ | 0.5 | 10 | 20 | 5:100 | 0.2 | $Li_6PS_5Cl$ | 6h | 500 MPa | | / | / | 1,000 |
| Example 13 | $SiO_2$ | 0.5 | 10 | 20 | 5:100 | 0.3 | $Li_6PS_5Cl$ | 6h | 500 MPa | | / | / | 1,000 |
| Example 14 | $Si_3N_4$ | 0.5 | 10 | 20 | 5:100 | 0.25 | $Li_6PS_5Cl$ | 6h | 500 MPa | | / | / | 1,000 |
| Example 15 | BN | 0.5 | 10 | 20 | 5:100 | 0.1 | $Li_6PS_5Cl$ | 6h | 500 MPa | / | / | / | 1,000 |

Table 1-2

| Group | Ceramic fiber material | | | | | | Solid-state electrolyte | Dry approach | | Wet approach | | | Electrolyte membrane thickness (μm) |
| --- | --- | --- | --- | --- | --- | --- | --- | --- | --- | --- | --- | --- | --- |
| | Type | D (μm) | L (μm) | L/D | n1 | A0 | | Mixing time | Pressure of pressure treatment | Mixing time | Binder | n2 | |
| Example 16 | SiC | 5 | 100 | 20 | 5:100 | 0.05 | $Li_6PS_5Cl$ | 6 h | 500 MPa | / | / | / | 1,000 |
| Example 17 | SiC | 0.5 | 5 | 10 | 5:100 | 0.05 | $Li_6PS_5Cl$ | 6 h | 500 MPa | / | / | / | 1,000 |
| Example 18 | SiC | 0.5 | 1 | 2 | 5:100 | 0.05 | $Li_6PS_5Cl$ | 6 h | 500 MPa | / | / | / | 1,000 |
| Example 19 | SiC | 1 | 10 | 10 | 5:100 | 0.05 | $Li_6PS_5Cl$ | 6 h | 500 MPa | / | / | / | 1,000 |
| Example 20 | SiC | 1.5 | 30 | 20 | 5:100 | 0.05 | $Li_6PS_5Cl$ | 6 h | 500 MPa | / | / | / | 1,000 |
| Example 21 | SiC | 2 | 200 | 100 | 5:100 | 0.05 | $Li_6PS_5Cl$ | 6 h | 500 MPa | / | / | / | 1,000 |
| Example 22 | SiC | 0.1 | 20 | 200 | 5:100 | 0.05 | $Li_6PS_5Cl$ | 6 h | 500 MPa | / | / | / | 1,000 |
| Example 23 | SiC | 1 | 500 | 500 | 5:100 | 0.05 | $Li_6PS_5Cl$ | 6 h | 500 MPa | / | / | / | 1,000 |
| Example 24 | SiC | 0.5 | 10 | 20 | 5:100 | 0.05 | $Li_7La_3Zr_2O_{12}$ | / | / | 3h | NBR | 1:100 | 50 |
| Example 25 | SiC | 0.5 | 10 | 20 | 5:100 | 0.05 | $Li_4AlS_3Cl$ | / | / | 3h | NBR | 1:100 | 50 |
| Comparative example 1 | / | / | / | / | / | / | $Li_6PS_5Cl$ | 6 h | 500 MPa | / | / | / | 1,000 |
| Comparative example 2 | SiC | 0.5 | 0.5 | 1 | 5:100 | 0.99 | $Li_6PS_5Cl$ | 6 h | 500 MPa | / | / | / | 1,000 |

In the tables, D represents the diameter of the ceramic fiber material, L represents the length of the ceramic fiber material, n1 represents the volume ratio of the ceramic fiber material to the solid-state electrolyte, A0 represents the distribution uniformity of the ceramic fiber material in the solid-state electrolyte, n2 represents the mass ratio of the binder to the solid-state electrolyte, and NBR represents styrene-butadiene rubber.

It should be noted that the diameter and length of the ceramic fiber material mentioned above were measured using the following method: a cross-section of the solid-state electrolyte membrane with a neat fracture was prepared using an ultrasonic knife, the cross-section was observed through a scanning electron microscope, the ceramic fiber material was distinguished based on material contrast in the backscattered electron imaging mode of the scanning electron microscope, and the length and diameter of the ceramic fiber material were measured.

The volume ratio of the ceramic fiber material to the solid-state electrolyte mentioned above was measured using the following method: an electrolyte disc with a diameter of 10 mm was prepared using an ultrasonic knife or slicing mold, the disc was observed with a high-resolution X-ray tomography scanner, the ceramic fiber material was distinguished from the solid-state electrolyte material based on grayscale values reflecting material electron density within pixels in the high-precision X-ray tomography results, and the volume proportion of the ceramic fiber material in the solid-state electrolyte membrane/disc was confirmed.

The distribution uniformity of the ceramic fiber material in the solid-state electrolyte mentioned above was measured using the following method: a solid-state electrolyte membrane was taken, a cross-section with a neat fracture of the ceramic fiber material and the solid-state electrolyte was prepared using an ultrasonic knife method, the cross-section was observed with a scanning electron microscope, the ceramic fiber material was distinguished from the solid-state electrolyte based on material contrast in the backscattered electron imaging mode of the scanning electron microscope, and the distribution uniformity was calculated based on image measurements. Based on scanning electron microscope images, the distances $d_i$ (i = 1, 2, 3, ..., N) between cross-sections of the ceramic fiber material were measured using the line analysis method, and the standard deviation $\sigma_d$ of the N distances was calculated from $d_i$:

$$A0 = \frac{\sigma_d}{d} = \sqrt{\frac{1}{N}\sum \left(\frac{d_i}{d} - 1\right)^2}$$

.

A0 represents the distribution uniformity of the ceramic fiber material in the solid-state electrolyte, and d represents the average of the distances between the N cross-sections of the ceramic fiber material.

The thickness of the solid-state electrolyte membrane mentioned above was measured using the following method: calibrate a micrometer, place the solid-state electrolyte membrane between two anvils, gently rotate the sleeve until a sound was heard, and record the reading as the thickness of the solid-state electrolyte membrane.

II. Performance testing of solid-state electrolyte membrane

1. Critical current density

At 25°C, two 8 mm dendritic, 50 $\mu$m thick lithium metal discs were placed symmetrically at the center on both sides of the solid-state electrolyte membrane, mechanical pressure was applied to ensure tight contact between the lithium metal discs and the solid-state electrolyte membrane, and a lithium/solid-state electrolyte membrane/lithium symmetrical battery was formed; the symmetrical battery was assembled and encapsulated, the lithium/solid-state electrolyte membrane/lithium symmetrical battery was started at 0.25 mA/cm², 1 mAh/cm² of lithium was deposited and stripped on one side sequentially, then the current was increased to 0.5 mA/cm², deposition and stripping were maintained at an areal capacity of 1 mAh/cm², and the current was incrementally increased by 0.25 mA/cm² steps at 0.75 mA/cm², 1.0 mA/cm², 1.25 mA/cm², and so forth up to 10 mA/cm², and the current density at which the voltage dropped suddenly and significantly was recorded as the critical current density.

2. Fracture toughness

In an argon atmosphere, the surface of the solid-state electrolyte membrane was polished with sandpaper progressively from 800 grit to 2000 grit, 4000 grit, and 8000 grit until the surface of the solid-state electrolyte membrane exhibited mirror-like characteristics with no obvious defects; then, an indentation test was performed on the polished surface using a Vickers conical indentation tester; an appropriate load was applied to drive the indentation tester until radial cracks appeared at the four corners of the conical indentation; the fracture toughness value $K_{IC}$ was calculated using the following formula based on the indentation load S, the extension length L of the radial cracks, and the Vickers hardness $H_V$:

$$K_{IC} = 0.016 \left(\frac{E}{H_V}\right)^{\frac{1}{2}} \left(\frac{S}{L^{\frac{3}{2}}}\right) (MPa \cdot \sqrt{m})$$

E represents the Young's modulus of the solid-state electrolyte membrane.

3. Ionic conductivity

At 25°C, the solid-state electrolyte membrane was clamped tightly between two 10 mm-diameter cylindrical stainless steel current collectors in a battery mold under mechanical pressure, the current collectors were connected to an electrochemical workstation, and an electrochemical impedance test was performed on the solid-state electrolyte membrane with a bias voltage of 10 mV and a frequency range of $10^6$ Hz to 0.1 Hz. The Z' coordinate value of the point closest to the Z' axis in the low-frequency segment of the electrochemical impedance spectrum curve, from right to left, was used as the resistance R, and the ionic conductivity was calculated using the following formula:

$$\sigma = \frac{1}{R} \cdot \frac{D}{A}$$

D represents the thickness of the solid-state electrolyte membrane, and A represents the contact area between the solid-state electrolyte membrane and the current collectors.

The test results of the critical current density, fracture toughness, and ionic conductivity of the solid-state electrolyte membranes in the above examples and comparative examples are shown in Table 2.

III. Preparation of all-solid-state battery

1. Preparation of positive electrode plate

NCM811 (as the positive electrode active material), nitrile rubber (NBR, as the binder), VGCF (as the conductive agent), and $Li_6PS_5Cl$ (as the electrolyte) were mixed at a mass ratio of 80: 1.5:0.5: 18, p-xylene was added and stirred to form a uniformly dispersed slurry; the slurry was applied evenly on one side of an aluminum foil, the coated material was transferred to a vacuum drying oven for complete drying; and the obtained electrode plate was rolled, then punched to obtain the positive electrode plate.

2. Preparation of negative electrode plate

In Examples 1 to 11, Examples 16 to 23, and Comparative examples 1 and 2, lithium metal was used as the negative electrode active material, and the preparation method of the negative electrode plate is as follows:

Lithium metal foil was rolled to reduce the thickness to 50 $\mu$m, the lithium metal foil was applied to one side surface of a copper foil through further rolling, and the material was slit to obtain the negative electrode plate.

In Examples 12 to 15 and Examples 24 and 25, artificial graphite was used as the negative electrode active material, and the preparation method of the negative electrode plate was as follows:

Artificial graphite (as the negative electrode active material), conductive carbon black (as the conductive agent), styrene-butadiene rubber (as the binder), and $Li_6PS_5Cl$ (as the electrolyte) were mixed at a mass ratio of 70:2:2:26, deionized water was added and stirred to disperse into a negative electrode slurry; the negative electrode slurry was applied evenly on one side of a copper foil, the coated material was dried, cold pressed, and slit to obtain the negative electrode plate.

3. Solid-state electrolyte membrane

The solid-state electrolyte membranes prepared in the above examples and comparative examples were used, respectively.

IV. Performance testing of all-solid-state battery

1. Scanning electron microscopy

The cross-section of the solid-state electrolyte membrane in Example 2 was scanned using an electron scanning microscope, as shown in FIG. 1. FIG. 1 indicated that the ceramic fiber material 111 was uniformly distributed in the solid-state electrolyte 112.

2. Maximum charging current density

As an example, the maximum charging current density of the all-solid-state battery mentioned above may be measured using a step-current density cycling method until failure: at 25°C, assemble and encapsulate the all-solid-state battery, start the full battery at 0.25 mA/cm$^2$, perform charging and discharging respectively while controlling the capacity at 1 mAh/cm$^2$ to ensure a constant areal capacity during cycle testing, increase the current to 0.5 mA/cm$^2$ after completing the first cycle, maintain charging and discharging cycles at an areal capacity of 1 mAh/cm$^2$, and incrementally increase the current by 0.25 mA/cm$^2$ steps at 0.75 mA/cm$^2$, 1.0 mA/cm$^2$, 1.25 mA/cm$^2$, and so forth up to 10 mA/cm$^2$ for cycling of the all-solid battery, and record the current density at which the voltage drops suddenly and significantly or exhibits obvious jitter as the maximum charging current density.

The performance test results of the above embodiments and comparative examples are shown in Table 2 below.

**Table 2**

| Group | Solid-state electrolyte membrane | | | All-solid-state battery |
|---|---|---|---|---|
| | Critical current density (mA/cm$^2$) | Fracture toughness (MPa m^(1/2)) | Ionic conductivity (mS/cm) | Maximum charging current density |
| Example 1 | 1.50 | 0.33 | 3.2 | 1.50 |
| Example 2 | 2.0 | 0.56 | 3.9 | 2.0 |
| Example 3 | 1.25 | 0.24 | 4.8 | 1.25 |
| Example 4 | 2.0 | 0.63 | 2.7 | 2.0 |
| Example 5 | 1.5 | 0.35 | 4.2 | 1.5 |
| Example 6 | 2.0 | 0.58 | 3.7 | 2.0 |
| Example 7 | 1.25 | 1.47 | 0.23 | 1.25 |
| Example 8 | 1.0 | 1.79 | 0.12 | 1.0 |
| Example 9 | 1.25 | 0.27 | 4.9 | 1.25 |
| Example 10 | 1.0 | 0.23 | 5.1 | 1.0 |
| Example 11 | 1.0 | 1.85 | 0.11 | 1.0 |
| Example 12 | 2.5 | 0.74 | 4.1 | 4.0 |
| Example 13 | 2.25 | 0.68 | 4.5 | 3.5 |
| Example 14 | 2.0 | 0.63 | 3.8 | 3.25 |
| Example 15 | 1.75 | 0.56 | 3.9 | 2.5 |
| Example 16 | 1.5 | 0.48 | 2.4 | 1.5 |
| Example 17 | 1.75 | 0.44 | 4.0 | 1.75 |
| Example 18 | 1.5 | 0.29 | 3.2 | 1.5 |
| Example 19 | 1.75 | 0.49 | 3.9 | 1.75 |
| Example 20 | 2.0 | 0.51 | 3.4 | 2.0 |
| Example 21 | 2.5 | 0.71 | 4.1 | 2.5 |
| Example 22 | 2.0 | 0.76 | 3.3 | 2.0 |
| Example 23 | 1.75 | 0.89 | 2.5 | 1.75 |
| Example 24 | 0.75 | 2.31 | 0.5 | 1.25 |

(continued)

| Group | Solid-state electrolyte membrane | | | All-solid-state battery |
|---|---|---|---|---|
| | Critical current density (mA/cm$^2$) | Fracture toughness (MPa m^(1/2)) | Ionic conductivity (mS/cm) | Maximum charging current density |
| Example 25 | 1.25 | 1.52 | 0.7 | 1.75 |
| Comparative example 1 | 0.75 | 0.21 | 5.1 | 1.25 |
| Comparative example 2 | 0.75 | 0.37 | 3.8 | 1.25 |

From the results of Examples 1 to 25 and Comparative example 1 in Table 2, distributing the ceramic fiber material in the solid-state electrolyte enhances the fracture toughness and mechanical strength of the solid-state electrolyte membrane while ensuring ionic conductivity of the solid-state electrolyte, significantly increasing the critical current density of the solid-state electrolyte membrane and improving the fast charging capability of the all-solid-state secondary battery.

The difference between Example 1 and Example 2 lies in the dry mixing time, resulting in different distribution uniformity of the ceramic fiber material in the solid-state electrolyte. Compared to Example 2, the critical current density, fracture toughness, and maximum charging current density of the all-solid-state battery in Example 1 are reduced; this indicates that uniform distribution of the ceramic fiber material in the solid-state electrolyte enhances the fracture toughness and mechanical strength of the solid-state electrolyte, suppresses cracking of the solid-state electrolyte due to stress from lithium metal deposition, and significantly increases the critical current density of the solid-state electrolyte membrane.

The main differences among Examples 2 to 11 lie in the volume ratio of the ceramic fiber material to the solid-state electrolyte; Example 10 has the smallest volume ratio of the ceramic fiber material to the solid-state electrolyte, and Example 11 has the largest volume ratio of the ceramic fiber material to the solid-state electrolyte. Compared to Examples 2 to 9, the fracture toughness of the solid-state electrolyte membrane in Example 10 is reduced, and the critical current density and ionic conductivity in Example 11 are decreased; the speculated reason may be that an insufficient amount of ceramic fiber material fails to effectively improve the mechanical properties and fracture toughness of the solid-state electrolyte, while an excessive amount of the ceramic fiber material occupies too much volume of the solid-state electrolyte, reducing the distribution uniformity of bulk and interfacial ion transport pathways in the solid-state electrolyte, inducing localized current density hotspots, and lowering the critical current density of the solid-state electrolyte.

The main differences among Example 2, Examples 16 to 23, and Comparative example 2 lie in the aspect ratio of the ceramic fiber material; from the results of Example 2, Examples 16 to 23, and Comparative example 2, an aspect ratio of the ceramic fiber material $\geq 2$ increases the fracture toughness and critical current density of the solid-state electrolyte membrane, enhancing the fast charging capability of the all-solid-state battery.

Technical features in the foregoing embodiments may be combined in any way. For brevity of description, not all possible combinations of the technical features in the foregoing embodiments are described. However, as long as no contradiction exists among combinations of these technical features, all combinations should be considered within the scope recorded in the present specification.

The foregoing embodiments represent only several implementations of the present application, with specific and detailed descriptions, but should not be construed as limiting the scope of the present application patent. A person of ordinary skill in the art may make several modifications and improvements without departing from the concept of the present application, and these modifications and improvements also fall within the protection scope of the present application. Therefore, the protection scope of the present application should be subject to the appended claims.

**Claims**

1.    A solid-state electrolyte membrane, comprising a solid-state electrolyte and a ceramic fiber material dispersed in the solid-state electrolyte, wherein

the solid-state electrolyte comprises an inorganic solid-state electrolyte; and
a diameter of the ceramic fiber material is denoted as D, a length of the ceramic fiber material is denoted as L, and the diameter and the length of the ceramic fiber material satisfy: L/D $\geq$ 2.

2.    The solid-state electrolyte membrane according to claim 1, wherein the diameter and the length of the ceramic fiber material satisfy: L/D ≥ 20; and optionally, 20 ≤ L/D ≤ 500.

3. The solid-state electrolyte membrane according to any one of claims 1 and 2, wherein the diameter of the ceramic fiber material satisfies: D ≤ 5 μm; and optionally, 0.5 μm ≤ D ≤ 2 μm.

4. The solid-state electrolyte membrane according to any one of claims 1 to 3, wherein the length of the ceramic fiber material satisfies: 1 μm ≤ L ≤ 500 μm; and optionally, 10 μm ≤ L ≤ 200 μm.

5. The solid-state electrolyte membrane according to any one of claims 1 to 4, wherein the ceramic fiber material comprises one or more of silicon carbide fiber, silicon nitride fiber, boron nitride fiber, aluminum oxide fiber, and silicon dioxide fiber.

6. The solid-state electrolyte membrane according to any one of claims 1 to 5, wherein the ceramic fiber material exhibits at least one of the following characteristics (1)-(2):

   (1) a volume ratio of the ceramic fiber material to the solid-state electrolyte is (0.01~40):100; and optionally, (3~7):100; and
   (2) a mass ratio of the ceramic fiber material to the solid-state electrolyte is (0.01~85):100; and optionally, (2~15):100.

7. The solid-state electrolyte membrane according to any one of claims 1 to 6, wherein a distribution uniformity of the ceramic fiber material in the solid-state electrolyte is ≤ 0.3; and
   optionally, the distribution uniformity of the ceramic fiber material in the solid-state electrolyte is ≤ 0.1.

8. The solid-state electrolyte membrane according to any one of claims 1 to 7, wherein the solid-state electrolyte further comprises a binder distributed therein;

   optionally, the binder comprises one or more of nitrile rubber, polyvinylidene fluoride, polytetrafluoroethylene, polyacrylic acid, polyvinyl alcohol, polyimide, polyacrylonitrile, polyurethane, polycarboxymethyl cellulose, cyclodextrin, sodium alginate, polysaccharide, nitrile rubber, and styrene-butadiene rubber; and
   optionally, a mass ratio of the binder to the solid-state electrolyte is (0.01~20):100; and optionally, (0.5~5):100.

9. The solid-state electrolyte membrane according to any one of claims 1 to 8, wherein the solid-state electrolyte membrane exhibits at least one of the following characteristics (1)-(4):

   (1) a critical current density of the solid-state electrolyte membrane at 25°C is 0.5 mA/cm$^2$ - 10 mA/cm$^2$;
   (2) a fracture toughness of the solid-state electrolyte membrane is 0.05 MPa m^(1/2) - 2 MPa m^(1/2);
   (3) an ionic conductivity of the solid-state electrolyte membrane at 25°C is 0.1 mS/cm$^2$ - 10 mS/cm$^2$; and
   (4) a thickness of the solid-state electrolyte membrane is 1 μm - 1000 μm.

10. A method for preparing the solid-state electrolyte membrane according to any one of claims 1 to 99, comprising:

    mixing the ceramic fiber material and the solid-state electrolyte to prepare a mixture; and
    performing a forming process on the mixture to prepare the solid-state electrolyte membrane.

11. The method for preparing the solid-state electrolyte membrane according to claim 10, wherein dry mixing is used to mix the ceramic fiber material and the solid-state electrolyte; and
    optionally, the mixing time is 1 h - 24 h.

12. The method for preparing the solid-state electrolyte membrane according to claim 11, wherein the forming process comprises pressure treatment; and optionally, a pressure of the pressure treatment is 200 MPa - 600 MPa.

13. The method for preparing the solid-state electrolyte membrane according to claim 10, wherein wet mixing is used to mix the ceramic fiber material and the solid-state electrolyte; and
    optionally, the mixing time is 0.5 h - 12 h.

14. The method for preparing the solid-state electrolyte membrane according to claim 13, wherein the forming process comprises applying the mixture to form a film followed by drying.

**15.** An all-solid-state battery, comprising the solid-state electrolyte membrane according to any one of claims 1 to 9.

**16.** An electric apparatus, comprising the all-solid-state battery according to claim 15.

FIG. 1

<u>1</u>

FIG. 2

FIG. 3

FIG. 4

## INTERNATIONAL SEARCH REPORT

International application No.

**PCT/CN2023/142849**

**A.    CLASSIFICATION OF SUBJECT MATTER**

H01M10/056(2010.01)i;  H01M10/0525(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXT, ENTXTC, VCN, VEN: 半径, 棒, 长度, 长径比, 氮化硅, 氮化硼, 电解质, 二氧化硅, 固态, 固态电解质, 固体, 三氧化二铝, 束, 碳化硅, 陶瓷, 陶瓷晶须, 陶瓷纤维, 纤维, 线, 氧化铝, 直径, 柱, Al2O3, BN, Si3N4, SiC, SiO2, Diameter, Rod, Aspect ratio, Solid electrolyte, Ceramic fiber, Nanowire, Ceramic whiskers, Boron nitride, Silicon nitride, Silicon carbide, Alumina, Membrane, solid state, Radius

**C.    DOCUMENTS CONSIDERED TO BE RELEVANT**

| Category* | Citation of document, with indication, where appropriate, of the relevant passages | Relevant to claim No. |
|---|---|---|
| X | WO 2019208347 A1 (FUJIFILM CORP.) 31 October 2019 (2019-10-31) description, paragraphs 0007-0118 | 1-16 |
| PX | CN 116072960 A (JIANGSU CONTEMPORARY AMPEREX TECHNOLOGY LTD.) 05 May 2023 (2023-05-05) claims 1-16 | 1-16 |
| Y | CN 114094179 A (GREEN AVIATION TECHNOLOGY RESEARCH INSTITUTE, CHONGQING JIAOTONG UNIVERSITY) 25 February 2022 (2022-02-25) claims 1-10 | 1-16 |
| Y | US 2020112050 A1 (UNIVERSITY OF MARYLAND, BALTIMORE) 09 April 2020 (2020-04-09) claims 1-48, and embodiment 5 | 1-16 |
| A | CN 108511793 A (DONGHUA UNIVERSITY) 07 September 2018 (2018-09-07) entire description | 1-16 |

☑ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 February 2024** | **29 February 2024** |

Name and mailing address of the ISA/CN

**China National Intellectual Property Administration (ISA/CN)**
**China No. 6, Xitucheng Road, Jimenqiao, Haidian District, Beijing 100088**

Authorized officer

Telephone No.

Form PCT/ISA/210 (second sheet) (July 2022)

**INTERNATIONAL SEARCH REPORT**

International application No.

**PCT/CN2023/142849**

**C. DOCUMENTS CONSIDERED TO BE RELEVANT**

| Category* | Citation of document, with indication, where appropriate, of the relevant passages | Relevant to claim No. |
|---|---|---|
| A | CN 109494390 A (LIYANG TIANMU PILOT BATTERY MATERIAL TECHNOLOGY CO., LTD.) 19 March 2019 (2019-03-19) entire description | 1-16 |
| A | JP 2014096311 A (NATIONAL INSTITUTE OF ADVANCED INDUSTRIAL & TECHNOLOGY et al.) 22 May 2014 (2014-05-22) entire description | 1-16 |
| A | WO 2021080052 A1 (GRINERGY CO., LTD.) 29 April 2021 (2021-04-29) entire description | 1-16 |

Form PCT/ISA/210 (second sheet) (July 2022)

**INTERNATIONAL SEARCH REPORT**
Information on patent family members

International application No.

**PCT/CN2023/142849**

| Patent document cited in search report | | | Publication date (day/month/year) | Patent family member(s) | | | Publication date (day/month/year) |
|---|---|---|---|---|---|---|---|
| WO | 2019208347 | A1 | 31 October 2019 | JPWO | 2019208347 | A1 | 13 May 2021 |
| | | | | JP | 7014900 | B2 | 01 February 2022 |
| CN | 116072960 | A | 05 May 2023 | | None | | |
| CN | 114094179 | A | 25 February 2022 | | None | | |
| US | 2020112050 | A1 | 09 April 2020 | | None | | |
| CN | 108511793 | A | 07 September 2018 | | None | | |
| CN | 109494390 | A | 19 March 2019 | KR | 20210060611 | A | 26 May 2021 |
| | | | | KR | 102577441 | B1 | 11 September 2023 |
| | | | | EP | 3876323 | A1 | 08 September 2021 |
| | | | | EP | 3876323 | A4 | 17 August 2022 |
| | | | | WO | 2020087873 | A1 | 07 May 2020 |
| | | | | US | 2022006118 | A1 | 06 January 2022 |
| | | | | JP | 2022506297 | A | 17 January 2022 |
| | | | | JP | 7338897 | B2 | 05 September 2023 |
| JP | 2014096311 | A | 22 May 2014 | JP | 6206900 | B2 | 04 October 2017 |
| WO | 2021080052 | A1 | 29 April 2021 | JP | 2022552549 | A | 16 December 2022 |

Form PCT/ISA/210 (patent family annex) (July 2022)

**EP 4 601 063 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310294817